# EUROPEAN PATENT APPLICATION

(11) **EP 1 900 292 A1**
(43) Date of publication of application: **19.03.2008**
(21) Application number: 06120738.7
(22) Date of filing: 15.09.2006
(51) Int. Cl.: A23L 1/19, A23F 5/00, A23J 7/00

(54) **Beverage creamer**

(71) Applicant: Nestec S.A., 1800 Vevey (CH)
(72) Inventor: Baechler, Robert, 1814 La Tour-de-Peilz (CH); Morgan, François, 35000 Rennes (FR); Schmitt, Christophe, Joseph, Etienne, 1092 Belmont S/Lausanne (CH); Servais, Colin, Jacques, 1400 Cheseaux-Noreaz (CH)
(74) Representative: Schuller, Cornelis

(57) **Abstract**

The present application describes a creamer composition comprising a mixture of phospholipids. The use of such a creamer composition in a beverage composition delivers mouthfeel benefits during consumption.

## Description

### Technical Field

The present invention relates to a creamer composition for a beverage, a method for preparing such a creamer composition and the use of such a creamer composition in a beverage composition to deliver mouthfeel benefits.

### Background and Prior Art

Compositions for creamers are well known in the art. Many creamers are provided in dry powder form for addition to beverages that, in the perception or according to the preference of the consumer, require whitening, lightening or creaming. Creamer formulations are also available in liquid or frozen form. Liquid creamers are often encountered in single serve packaging, such as capsules or sachets as well as multiserve packaging.

Current dry mixes used to prepare many instant beverages, especially instant flavoured coffee beverages, are typically fat emulsions, which contain fat or oil, carbohydrate, protein, emulsifiers, stabilizers, and buffers. The amounts of these ingredients will vary depending on whether the creamer is powdered, liquid or frozen. Typically, a powdered creamer contains about 25% to 50% fat, 35% to 65% carbohydrate, 3% to 12% protein, 1% to 5% emulsifiers, 1% to 3% buffers, and 0.5 to 3% stabilizers. Generally, powdered creamers are produced by subjecting a solution containing the components to spray-drying. Consumers usually prepare flavoured instant beverages using, on average, 7.5% solids, and more generally depending on their personal taste preference in the range of 5%-10% solids. Unfortunately, at a 5-10% dosage of solids, instant beverages prepared from current dry mixes are perceived as thin and watery and do not develop any foamy/frothy head. They also lack the creamy mouthfeel, richness, flavour impact and sweetness that are desired by consumers of such products.

EP 1 199 948 (Procter & Gamble) relates to dissolution agents to be used in the manufacture of instant beverages products. The dissolution agent is a special blend of emulsifier including lecithin, propylene glycol, ethoxylated mono and diglycerides and lower polyol fatty acid ester.

Creamy beverages, generally, and creamy coffee beverages, in particular, typically rely on finely dispersed fat (homogenized fat) to deliver mouthfeel. This emulsified fat can be delivered by liquid or spray dried non-dairy creamers, whole milk, or low fat milk. However, the fat found at normal levels in current flavoured coffee beverages provides insufficient mouthfeel benefits. These mouthfeel benefits can be improved by increasing the level of fat. However, increasing the level of fat creates other issues such as instability of the fat against oxidative reactions, the development of off-flavours, and the potential instability of the emulsion of the non-dairy creamer.

It is therefore desirable to provide a versatile creamer for beverages of any kind, which delivers to the beverage an improved mouthfeel without increasing fat content.

### Summary of the Invention

According to the present invention, there is provided a creamer composition comprising a mixture of phospholipids.

The present invention also provides a method for preparing a creamer composition. The method basically comprises providing a mixture of phospholipids, protein, sugar and buffer salts in water, heating the mixture at a temperature in the range of 40 to 70 °C for a sufficient time under agitation, maintaining the mixture in a buffer tank, homogenization (optionally in two stages), pasteurization and optionally drying the pasteurized emulsion.

The present invention also provides a preferred method for preparing a creamer composition comprising providing a mixture of phospholipids, protein, sugar and buffer salts in water, heating the mixture at a temperature in the range of 40 to 70 °C for a sufficient time under agitation, maintaining the mixture in a buffer tank at a temperature in a range of 40 to 60 °C, preheating the mixture to a temperature in a range of 70 to 80 °C for a short time (1 to 3 minutes), a two-stage homogenisation of the mixture, pasteurisation of the homogenised mixture at a temperature in the range of 50 to 60 °C; cooling down the pasteurized mixture to ambient temperature and drying the pasteurized emulsion.

The present invention further provides beverages such as instant beverage products and ready-to-drink beverages.

The invention also provides the use of a creamer composition in a beverage to provide one or more mouthfeel benefits (as defined herein) wherein the creamer composition is as defined above.

The sub-claims define preferred embodiments of the subject-matter claimed.

### Detailed Description of the Invention

The creamer compositions of the present invention have been found to provide improved mouthfeel to beverages of any kind.

In the context of the present invention, the term "mouthfeel" denotes "creaminess", "richness", "body", "complexity", "body-richness" and "thickness", without "sliminess" or "stringiness".

As used herein, the terms "instant beverage" and "soluble beverage" are used interchangeably to refer to beverage products, such as instant or soluble coffee products, that are relatively soluble in water, especially hot water, and are typically mixed with a liquid base such as an aqueous liquid or diluent, i.e., water, milk or other aqueous medium, to provide a ready-to-serve or ready-to-drink beverage.

These products are sold to the consumer by the manufacturer in a dry mix, powder, concentrate, or emulsion form and are prepared by the consumer, according to directions or according to personal taste, at or near the time of serving and/or consumption.

According to the present invention, the creamer composition comprises a mixture of phospholipids. The main component of the mixture of phospholipids is phosphatidylcholine (lecithin).

The term "lecithin" includes conventional lecithins, acetylated lecithins and other suitable lecithin or lecithin-like compounds.

In a preferred embodiment of the invention, the mixture of phospholipids further contains at least one phospholipid selected from phosphatidylinositol, phosphatidylethanolamine, phosphatidic acid and lysophosphatidylcholine.

The mixture of phospholipids usually further contains minor amounts of glycolipids such as digalactosyldiglycerides (DD), sterylglucosides (SG), and sterylglucoside esters (SGE). In principle, the amount of glycolipids in the mixture of phospholipids does not exceed 20 %.

The mixture of phospholipids may be derived from highly purified phospholipids preparations, as well as from mixtures, which are generally used in food industry and confectionery industry. Examples therefore are defatted lecithins, either in fluids (in fat) or in powdered or pasty (defatted) forms and those, which are lecithins in fat, i.e. the phospholipids are dissolved in fat.

In a particularly preferred embodiment of the present invention, the creamer composition comprises a mixture of phospholipids containing phosphatidylcholine, phosphatidylinositol, phosphatidylethanolamine, phosphatidic acid and lysophosphatidylcholine. It has been shown that a superior mouthfeel can be achieved when the amount of phosphatidylcholine in the mixture is in a range of 20 to 60 % based on the total mixture.

According to the invention, there are no restrictions as to the source of the phospholipids. They may be selected from animal or plant sources. In a preferred embodiment of the invention, the phospholipids are derived from soy.

The creamer composition of the present invention may also contain other ingredients such as fat, protein, sugar and buffer salts.

The role of fat is related to whitening and aroma but, usually, its influence on texture is limited to contributing to the fatty or smooth sensation. Whitening and aroma are related to fat globule size.

In principle any fat may be used in the creamer composition, i.e. animal or vegetable fat. Preferably, a vegetable fat is preferred, an example therefore is hydrogenated palm kernel oil. Alternatively, soy oil or sunflower oil may be used.

The fat added is related to the amount of phospholipids. The fat to phospholipid ratio is between 3 and 0, with 2.2 being preferred.

Usually, a low amount of protein is necessary to stabilize the creamer composition by stabilizing the oil-water surface. Usually, the amount of the protein is 5 % of the fat content. Preferably, sodium or calcium caseinate is used as a suitable stabilizing protein.

The creamer composition of the present invention may also contain a sugar component. In principle, a sugar being less sweet is preferred. Sweeteners useful include natural and artificial sweeteners. A preferred natural sweetener is maltodextrin having a relatively low dextrose equivalent. Maltodextrin DE21 has been shown to be preferred. The amount of sugar may be varied. Typically, the sugar may be present in an amount of 10 to 70 %, preferably 30 to 60 %, based on the creamer composition.

Usually, the creamer composition also comprises a combination of buffer salts to stabilize the entire compositions. Examples of suitable buffer salts are alkali metal phosphates such as potassium/sodium phosphate and sodium/potassium hexametaphosphate. Further, citrate salts may be used as complexing agents. In addition, silikoaluminates may be used. The amount of the buffer salts should be no more than 10 % based on the creamer composition.

The creamer composition of the present invention can be provided as a non-dairy creamer or dairy creamer. The non-dairy creamer is free of milk components. The dairy creamer composition usually contains milk powder such as skimmed milk powder (SMP). Typically, the content of the milk powder in the creamer composition does not exceed 50 %.

If appropriate, the creamer composition of the present invention may contain a foaming agent. Suitable foaming agents are, for example, an edible water-soluble carbonate or bicarbonate salt that evolves carbon dioxide when it reacts with an acid component contained in the composition.

In addition, water is usually added to the creamer composition in a low amount. Generally, water is present in an amount of 1 to 10 % based on the whole creamer composition.

It has been surprisingly shown that the phospholipids contained in the creamer composition of the present invention improve the mouthfeel, especially body, smoothness and mouthcoating while reducing astringency. In particular, the phospholipids used are suitable for non-dairy applications which meet the today's requirements. In particular, people who do not tolerate lactose can suitably consume the non-dairy creamer composition of the present invention to cream/whiten their coffee or tea.

The creamer composition of the present invention shows an excellent creaming effect with low levels added. Usually, 0.1 to 0.3 g / 100 ml of beverage is sufficient to provide superior mouthfeel. The amount will depend on personal taste and the type and composition of the phospholipids which have been used. Effects of the phospholipids can be found when adding them to a final amount of between 0.01 - 10 g/100ml.

The creamer composition of the present invention is prepared by mixing the desired ingredients, heating, homogenization, pasteurization and optionally drying. The extend to which the different steps have to be performed will depend on the specific ingredients and the mixture of phospholipids that is used.

In preferred embodiment of the subject invention the following process was used. The creamer composition of the present invention can be prepared, for example, by a process comprising the following steps:
- providing a mixture of phospholipids, protein, sugar and buffer salts in water,
- heating the mixture at a temperature in the range of 40 to 70 °C for a sufficient time under agitation,
- maintaining the mixture in a buffer tank at a temperature in a range of 40 to 60 °C,
- preheating the mixture to a temperature in a range of 70 to 80 °C,
- two-stage homogenisation of the mixture,
- pasteurisation of the homogenised mixture at a temperature in the range of 50 to 60 °C;
- cooling down the pasteurized mixture to ambient temperature and
- drying the dispersion.

Note that in general the two-stage homogenisation and the drying are optional.

Preferably, the process is carried out in a liquiverter.

The phospholipid mixture, protein, sugar and buffer salts are those as herein defined above.

When the phospholipid mixture is used in a liquid form, it is added together with melted fat such as hydrogenated palm kernel oil.

Heating the mixture is preferably carried out for a period of 30 minutes to 2 hours.

It has been shown that texture improvements can be advantageously achieved when two homogenizations are carried out. In the first homogenization, the phosphor lipids are dispersed without fat while, in the second homogenization, fine oil droplets are created.

Usually, high homogenization pressures are suitable for mouthfeel and whitening issues. Typically, pressure of higher than 300 bars are applied in at least one homogenization stage.

In a preferred embodiment of the process to prepare the creamer composition of the present invention, the two-stage homogenization is carried out by applying a pressure in a range of 200 to 400 bar, preferably 300 to 350 bar, in the first stage and a pressure in the range of 40 to 100 bar, preferably 50 to 70 bar, in the second stage.

The pasteurized emulsion may be dried by spray-drying or freeze-drying. The product obtained is a powder-like material which can be further processed.

If the production of a dairy creamer composition is desired, milk powder such as skimmed milk powder is added to the mixture. In this case, a homogenization should be carried out after heating the mixture. Preferably, this homogenization is a two-stage homogenization. In a preferred embodiment the two-stage homogenization is carried out by applying a pressure in a range of 200 to 400 bar, preferably 250 to 350 bar, in the first stage and a pressure in the range of 40 to 100 bar, preferably 50 to 70 bar, in the second stage. If desired, fat may then be added depending from the phospholipid mixture used.

According to the present invention, a beverage is provided which contains the creamer composition as defined above. Preferably, the beverage is selected from coffee, tea, cacao, soft drinks and alcoholic drinks. In a particular preferred embodiment of the invention, the beverage is an instant beverage product or a ready-to-drink beverage.

The instant beverage as well as the ready-to-drink beverage is dilutable with a liquid base such as a water based liquid which is then prepared by the consumer.

A preferred instant beverage is a powdered beverage that contains coffee (or tea), sugar and the creamer composition of the present invention.

The present invention is also directed to the use of a creamer composition in a beverage. The beverage is selected from coffee, tea, cocoa, soft drinks and alcoholic drinks. The beverage may be an instant beverage product or ready-to-drink beverage. Preferably, the beverage is dilutable with a liquid base such as a water based liquid.

The beverage solids (e.g. instant coffee particles) can be prepared by any convenient process. The instant coffee component can be any one of the commercially available instant coffees sold on the market, or combinations thereof. These include spray dried instant coffee powders, agglomerates and freeze-died chunks. The coffee may be any single variety of coffee or a blend of different varieties. The coffee may be decaffeinated or undecaffeinated. Preferably, the beverage comprises from about 3% to about 25%, by weight of instant coffee; more preferably from about 5% to about 20%; more preferably still, from about 6% to about 15%, by weight based on the total weight of the beverage.

Soluble coffee can be also used. The soluble coffee can be prepared by any convenient process. A variety of such processes are known to those skilled in the art. Typically, soluble coffee is prepared by roasting and grinding a blend of coffee beans, extracting the roast and ground coffee with water to form an aqueous coffee extract, and drying the extract to form instant coffee, e.g. by spray-drying or freeze-drying.

The water content of the creamer composition depends on the nature of the composition and whether it is in dry or wet format, e.g. powdered, pasty or liquid.

For a dry composition, water is present at a level of from 1 to 10 % and is most preferably about 2 to 10 % based on the composition.

For a liquid composition, the water content may be from 50 to 99 % and is most preferably about 80 to 95 % based on the composition.

### Examples

The invention will now be illustrated by the following non-limiting examples.

All values are by weight unless stated otherwise. Examples according to the invention and comparative examples are denoted by numbers and letter respectively.

### Example 1

The following non-dairy creamer composition is prepared:

| | |
|---|---|
| Tapioka dextrin | 57.25 % |
| Palm kernel oil hydrogenated | 32.40 % |
| Caseinate Na | 1.75 % |
| K Phosphate dibasic | 2.50 % |
| Na-Hexametaphosphate | 0.40 % |
| Na Citrate tribasic | 0.40 % |
| Ultralec^{*)} | 2.10 % |
| Na Silicoaluminate | 0.20 % |
| Water | 3.00 % |

| | |
|---|---|
| ^{*)} Ultralec^{®} (ADM, Decatur,Ill.) is a phospholipid mixture. | |

### Example 2

The following dairy creamer composition is prepared:

| | |
|---|---|
| Ultralec^{*)} | 2.10 % |
| Coconut oil hardened | 30.00 % |
| Milk SNF | 45.46 % |
| Lactose monohydrate | 18.49 % |
| K Phosphate dibasic | 1.20 % |
| Na Hexametaphosphate | 0.65 % |
| Na Citrate tribasic | 0.30 % |
| Water | 1.80 % |

| | |
|---|---|
| ^{*)} Ultralec^{®} (ADM, Decatur,Ill.) is a phospholipid mixture. | |

Both creamer compositions have been tested by a test person panel. They have been evaluated to provide a superior mouthfeel when mixed with coffee.

## Claims

1. A creamer composition comprising a mixture of phospholipids.

2. The composition according to claim 1 wherein the mixture of phospholipids contains phosphatidylcholine.

3. The composition according to claim 2 wherein the mixture of phospholipids further contains at least one phospholipid selected from phosphatidylinositol, phosphatidylethanolamine, phosphatidic acid and lysophosphatidylcholine.

4. The composition according to any one of claims 1 to 3 wherein the mixture of phospholipids contains phosphateidylcholine, phosphatidylinositol, phosphatidylethanolamine, phosphatidic acid and lysophosphatidylcholine.

5. The composition according to claim 4 wherein the amount of phosphatidylcholine is in a range of 20 to 60 % based on the mixture.

6. The composition according to claim 4 further containing fat, protein, sugar and buffer salts.

7. The composition according to any one of claims 1 to 6 which is a non-dairy creamer.

8. The composition according to any one of claims 1 to 6 which is a dairy creamer.

9. The composition according to claim 8 which further contains milk powder.

10. The composition according to any one of claims 1 to 9 wherein the phospholipids are derived from soy.

11. The composition according to any one of claims 1 to 10 further containing a foaming agent.

12. A process for preparing a creamer composition comprising
- providing a mixture of phospholipids, protein, sugar and buffer salts in water,
- heating the mixture at a temperature in the range of 40 to 70 °C for a sufficient time under agitation,
- maintaining the mixture in a buffer tank at a temperature in a range of 40 to 60 °C,
- preheating the mixture to a temperature in a range of 70 to 80 °C,
- two-stage homogenisation of the mixture,
- pasteurisation of the homogenised mixture at a temperature in the range of 50 to 60 °C;
- cooling down the pasteurized mixture to ambient temperature and
- drying the pasteurized emulsion.

13. The process according to claim 12 wherein the phospholipids to be mixed are dispersed in fat.

14. The process according to claim(s) 12 and/or 13 wherein the two-stage homogenisation is carried out by applying a pressure in a range of 200 to 400 bar in the first stage and a pressure in a range of 40 to 100 bar in the second stage.

15. The process according to any one of claims 12 to 14 wherein milk powder is added to the mixture.

16. The process according to claim 15 wherein a homogenisation is carried out after heating the mixture.

17. The process according to claim 16 wherein the homogenisation is a two-stage homogenisation.

18. The process according to claim 17 wherein the two-stage homogenisation is carried out by applying a pressure in a range of 200 to 400 bar in the first stage and a pressure in a range of 40 to 100 bar in the second stage.

19. A beverage containing a creamer composition according to any one of claims 1 to 11.

20. The beverage according to claim 19 which is selected from coffee, tea, cocoa, soft drinks and alcoholic drinks.

21. The beverage according to claim 19 and/or 20 which is an instant beverage product.

22. The beverage according to claim 21 which is a ready-to-drink beverage.

23. The beverage according to claim 22 which is dilutable with a liquid base.

24. Use of a creamer composition according to any one of claims 1 to 11 in a beverage.

25. The use according to claim 24 wherein the beverage is selected from coffee, tea, cocoa, soft drinks and alcoholic drinks.

26. The use according to claim 24 and/or 25 wherein the beverage is an instant beverage product.

27. The use according to claim 26 wherein the beverage is a ready-to-drink beverage.

28. The use according to claim 27 wherein the beverage is dilutable with a liquid base.
